# EUROPEAN PATENT APPLICATION

(11) **EP 1 785 471 A1**
(43) Date of publication of application: **16.05.2007**
(21) Application number: 06023238.6
(22) Date of filing: 08.11.2006
(51) Int. Cl.: C10M 137/10, C07F 9/6571, C07F 9/165, C10N 30/06, C10N 30/08, C10N 30/10

(54) **A salt of sulfur-containing, phosphorus-containing compound, and method of preparation thereof**

(30) Priority: 09.03.2006 US 371787; 09.11.2005 US 734757 P
(71) Applicant: Afton Chemical Corporation, Richmond, VA 23219 (US)
(72) Inventor: DeGonia, David J., Midlothian, Virginia 23114 (US); Sheets, Roger M., Glen Allen, Virginia 23060 (US); Phillips, Ronald L., Richmond, Virginia 23235 (US)
(74) Representative: Schwabe - Sandmair - Marx

(57) **Abstract**

There is disclosed a salt of a sulfur-containing, phosphorus-containing compound. There is also disclosed a method of making the salt.

## Description

### DESCRIPTION OF THE DISCLOSURE

### Related Applications

This application claims the benefit of priority of U.S. Provisional Application No. 60/734,757, filed on November 9, 2005.

### Field of the Disclosure

The present disclosure relates to a sulfur-containing, phosphorus-containing compound, its salt, and methods of making the salt.

### Background of the Disclosure

The use of phosphorus-containing compounds for use in lubricant compositions is known. In particular, the phosphorus-containing compounds generally comprise linear alkyl chains. However, the problem with these compounds is that they are known to be thermally unstable at elevated temperatures in a fully formulated gear lubricant. A thermally unstable compound is more likely to prematurely decompose in the lubricant composition and would no longer provide a property, such as antiwear, to the lubricant composition.

Lubricant compositions, such as gear oils, typically are subjected to elevated temperatures and therefore it would be beneficial to provide a thermally stable compound that would not prematurely decompose at higher temperatures. A thermally stable compound would therefore remain in the lubricant composition for an extended period of time and provide the property, e.g., antiwear, to the composition over the extended period of time. What is needed is a compound that has the proper thermal stability to sustain its antiwear property.

### SUMMARY OF THE DISCLOSURE

In accordance with the disclosure, there is disclosed a compound of formula (V): 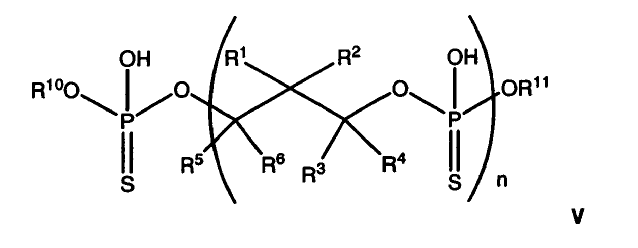 wherein n is an integer from 1 to 5; and
wherein R¹, R², R³, R⁴, R⁵, R⁶, R¹⁰, and R¹¹ are independently selected from the group consisting of hydrogen, cyano, and hydrocarbyl groups comprising from about 1 to about 30 carbon atoms.

In an aspect, there is disclosed a process of preparing a salt of a sulfur-containing, phosphorus-containing comprising combining a sulfur-containing compound, an amide, and a phosphorus-containing compound to form a first mixture; and combining the first mixture with an amine.

In another aspect, there is disclosed a process of preparing a compound of formula (II) comprising combining a sulfur-containing compound, an amide, and a compound of formula (I) 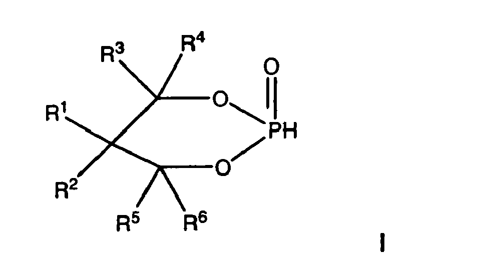 wherein R¹, R², R³, R⁴, R⁵, and R⁶ are independently selected from the group consisting of hydrogen, cyano, and hydrocarbyl groups comprising from about 1 to about 30 carbon atoms, wherein at least one substituent is a methyl, to yield a compound of formula (II) 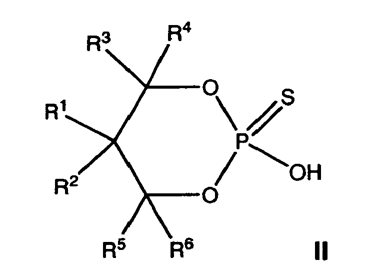 wherein R¹, R², R³, R⁴, R⁵, and R⁶ are as defined above.

Further, there is disclosed a process for preparing a salt of a sulfur-containing, phosphorus-containing compound comprising providing a sulfur-containing compound, an amide, and at least one of a dihydrocarbyl phosphite and a polymer phosphite to yield a sulfur-containing, phosphorus-containing compound; and providing an amine to yield a salt of the sulfur-containing, phosphorus-containing compound.

Additional objects and advantages of the disclosure will be set forth in part in the description which follows, and/or can be learned by practice of the disclosure. The objects and advantages of the disclosure will be realized and attained by means of the elements and combinations particularly pointed out in the appended claims.

It is to be understood that both the foregoing general description and the following detailed description are exemplary and explanatory only and are not restrictive of the disclosure, as claimed.

### BRIEF DESCRIPTION OF THE DRAWINGS

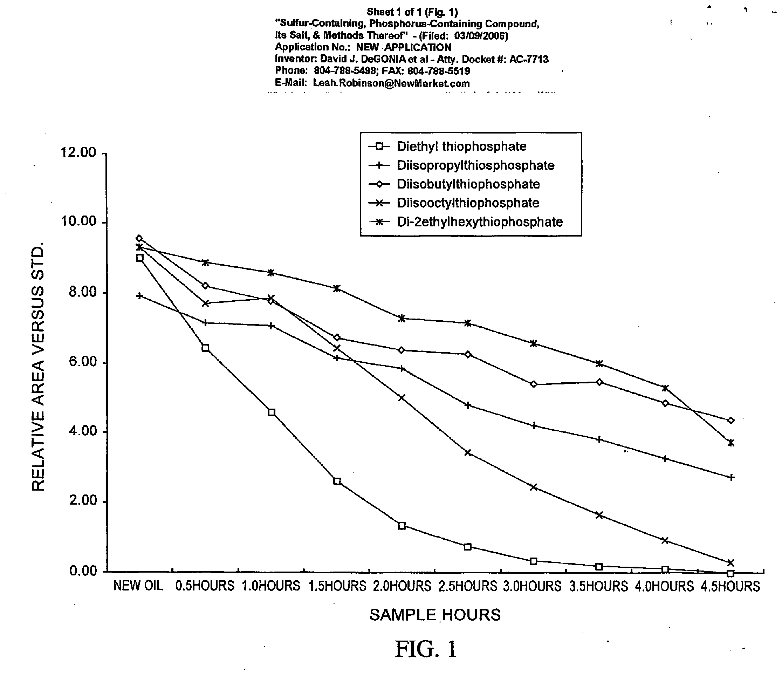

Figure 1 is a graph illustrating the thermal stability of various phosphorus-containing species.

### DESCRIPTION OF THE EMBODIMENTS

As used herein, the term "hydrocarbyl substituent" or "hydrocarbyl group" is used in its ordinary sense, which is well-known to those skilled in the art. Specifically, it refers to a group having a carbon atom directly attached to the remainder of the molecule and having predominantly hydrocarbon character. Examples of hydrocarbyl groups include:

(1) hydrocarbon substituents, that is, aliphatic (e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form an alicyclic radical);

(2) substituted hydrocarbon substituents, that is, substituents containing non-hydrocarbon groups which, in the context of this invention, do not alter the predominantly hydrocarbon substituent (e.g., halo (especially chloro and fluoro), hydroxy, alkoxy, mercapto, alkylmercapto, nitro, nitroso, and sulfoxy);

(3) hetero substituents, that is, substituents which, while having a predominantly hydrocarbon character, in the context of this invention, contain other than carbon in a ring or chain otherwise composed of carbon atoms. Heteroatoms include sulfur, oxygen, nitrogen, and encompass substituents as pyridyl, furyl, thienyl and imidazolyl. In general, no more than two, for example no more than one, non-hydrocarbon substituent will be present for every ten carbon atoms in the hydrocarbyl group; typically, there will be no non-hydrocarbon substituents in the hydrocarbyl group.

As used herein, the term "percent by weight", unless expressly stated otherwise, means the percentage the recited component represents to the weight of the entire composition.

In an aspect, there is provided a compound having at least one of improved antiwear and thermal stability. The compound can be a sulfur-containing, phosphorus-containing compound that can comprise steric hindrance to minimize and/or prevent decomposition of the compound at high temperatures. The disclosed compound can exhibit improved thermal stability and therefore remain in a lubricant composition longer than a composition that does not include steric hindrance. The steric hindrance can be present in any form, such as branching of hydrocarbyl chains, dependant hydrocarbyl chains, etc.

A phosphorus-containing compound, such as a phosphite or a phosphate can be used in the processes disclosed herein. Methods of making both phosphites and phosphates are known. For example, phosphites can be made by reacting either phosphorus acid or different phosphites with various alcohols. Another synthesis method includes reacting phosphorus trichloride with an excess of alcohol. Moreover, cyclic phosphites can be made by transesterification of phosphites with glycol, which can result in a mixture of monomeric and polymeric products. See Oswald, Alexis A., "Synthesis of Cyclic Phosphorous Acid Esters by Transesterification," Can. J. Chem., 37:1498-1504 (1959); and Said, Musa A., et al., "Reactivity of Cyclic Arsenites and Phosphites: X-ray structures of bis (5,5-dimethyl-1,3,2,-diosarsenan-2-yl)ether and bis (2,4,8,10-tetra-tert-butyl-12H-dibenzo[d,g][1,3,2]dioxarsenocin-6-yl)ether," J. Chem. Soc., 22:2945-51 (1995), the disclosures of which are hereby incorporated by reference. Methods for making cyclic hydrogen thiophosphites are also known, such as by reacting a cyclic chlorophosphite with hydrogen sulfide in the presence of pyridine. See Zwierzak, A., "Cyclic organophosphorus compounds. I. Synthesis and infrared spectral studies of cyclic hydrogen phosphites and thiophosphites, Can. J. Chem., 45:2501-12 (1967), the disclosure of which is hereby incorporated by reference.

In an aspect, the phosphite can be a di- or tri-hydrocarbyl phosphite. Each hydrocarbyl group can have from about 1 to about 24 carbon atoms, or from 1 to about 18 carbon atoms, or from about 2 to about 8 carbon atoms. Each hydrocarbyl group can be independently alkyl, alkenyl, aryl, and mixtures thereof. When the hydrocarbyl group is an aryl group, then it can contain at least about 6 carbon atoms; or from about 6 to about 18 carbon atoms. Non-limiting examples of the alkyl or alkenyl groups include propyl, butyl, hexyl, heptyl, octyl, oleyl, linoleyl, stearyl, etc. Non-limiting examples of aryl groups include phenyl, naphthyl, heptylphenol, etc. In an aspect, each hydrocarbyl group can be independently methyl, propyl, butyl, pentyl, hexyl, heptyl, oleyl or phenyl, for example methyl, butyl, oleyl or phenyl, and as a further example methyl, butyl, oleyl, or phenyl.

Non-limiting examples of useful phosphites include dibutyl hydrogen phosphonate, diisobutyl hydrogen phosphonate, dioleyl hydrogen phosphonate, di(C₁₄-₁₈) hydrogen phosphonate, triphenyl phosphite, a dihydrocarbyl phosphite such as a compound of formula (I), and a polymeric phosphite, such as a compound of formula (IV), both of which are shown below. 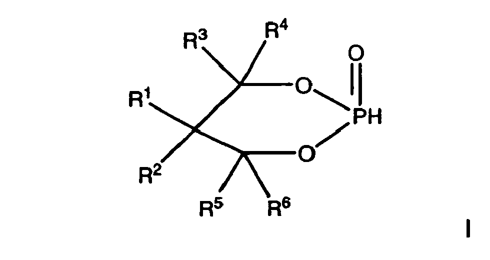 and 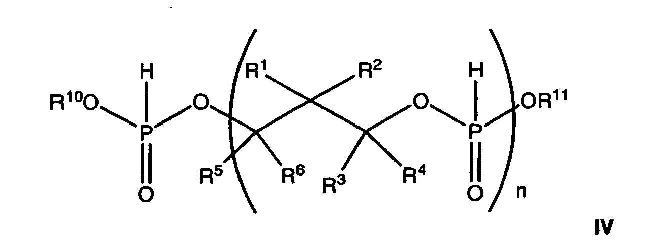 wherein n is an integer from about 1 to about 5; and
wherein R¹, R², R³, R⁴, R⁵, R⁶, R¹⁰, and R¹¹ can be independently selected from the group consisting of hydrogen, cyano, and hydrocarbyl groups comprising from about 1 to about 30 carbon atoms, for example from about 1 to about 20 carbon atoms, and as a further example from about 1 to about 10 carbon atoms. In an aspect, if n is an integer greater than about 5, it is believed, without being limited to any particular theory, that the repeating unit will not completely sulfurize.

In an aspect, in the compound of formula (I), R³, R⁴, R⁵, and R⁶ can be hydrogen; and R¹ and R² can be methyl. This compound is commonly referred to as neopentyl glycol phosphite (NPGP) and is registered with Chemical Abstracts Select under the designation CAS # 4090-60-2 (5,5-dimethyl-1,3,2-dioxaphosphorinan-2-one). In an aspect, in the compound of formula (IV), R¹ and R² can be methyl; R³, R⁴, R⁵, and R⁶ can be hydrogen; and R¹⁰ and R¹¹ can be alkyl groups comprising from about 1 to about 6 carbon atoms. This compound is a polymeric by-product of the manufacturing process of neopentyl glycol phosphite.

The phosphorus-containing compound can also be at least one of a phosphoric acid ester or salt thereof, a reaction product of a phosphorus acid or anhydride and an unsaturated compound, and mixtures of two or more thereof.

A metal dithiophosphate can be prepared by reacting a metal base with at least one thiophosphorus acids, which can be mono- or dithiophosphorus acids.

The phosphorus acid or anhydride can be reacted with an unsaturated compound, including but not limited to, amides, esters, acids, anhydrides, and ethers.

In an aspect, the phosphorus-containing compound, such as a phosphite, can comprise various functional groups that increase the steric hindrance of the compound and therefore increase its resistance to thermal decomposition. In an aspect, the phosphorus-containing compound can be branched at the position beta to the oxygen atom in the hydrocarbyl chain. It is believed that branching at this beta carbon can change, e.g., can improve, the thermal stability of the phosphorus-containing compound in a lubricant composition.

Moreover, the phosphorus-containing compound can be made using components that would increase the resultant compound's steric hindrance. For example, the alcohol used to make, for example, the phosphite can be a beta-branched alcohol. Non-limiting examples of beta-branched alcohols include isobutanol, 2-ethylhexanol, neopentyl glycol, neopentyl alcohol, pristanol, and methyl isobutyl carbinol (MIBC).

The disclosed phosphorus-containing compound can be used as a starting material to yield a sulfur-containing, phosphorus-containing compound. In an aspect, the process for making a sulfur-containing, phosphorus-containing compound can comprise providing a phosphorus-containing compound, such as those described above, a sulfur-containing compound, and a nitrogen-containing compound to yield the sulfur-containing, phosphorus-containing compound. The sulfur-containing, phosphorus-containing compound can have improved antiwear as compared to a non-sulfur-containing, phosphorus-containing compound. The disclosed composition can comprise a reaction product of a phosphorus-containing compound, a sulfur-containing compound, and a nitrogen-containing compound, such as an amide.

The sulfur-containing compound can be any compound that comprises free and/or active sulfur. Non-limiting examples of sulfur-containing compounds include sulfurized animal or vegetable fats or oils, sulfurized animal or vegetable fatty acid esters, fully or partially esterified esters of trivalent or pentavalent acids of phosphorus, sulfurized olefins, dihydrocarbyl polysulfides, sulfurized Diels-Alder adducts, sulfurized dicyclopentadiene, sulfurized or co-sulfurized mixtures of fatty acid esters and monounsaturated olefin, co-sulfurized blends of fatty acid, fatty acid ester and α-olefin, functionally-substituted dihydrocarbyl polysulfides, thio-aldehydes, thio-ketones and derivatives thereof (e.g., acids, esters, imines, or lactones), epithio compounds, sulfur-containing acetal derivatives, co-sulfurized blends of terpene and acyclic olefins, polysulfide olefin products, and elemental sulfur.

In an aspect, the sulfur-containing compound can be made by reacting an olefin, such as isobutene, with sulfur. The product, e.g., sulfurized isobutylene or sulfurized polyisobutylene, typically has a sulfur content of 10 to 55%, for example 30 to 50% by weight. A wide variety of other olefins or unsaturated hydrocarbons, e.g., isobutene dimer or trimer, can be used to form such sulfur-containing compounds.

In another aspect, polysulfides composed of one or more compounds represented by the formula: R²⁰ --Sₓ -R²¹ where R²⁰ and R²¹ can be hydrocarbyl groups each of which can contain from about 3 to about 18 carbon atoms and x can be in the range of from about 2 to about 8, for example in the range of from about 2 to about 5, and as a further example can be 3. The hydrocarbyl groups can be of widely varying types such as alkyl, cycloalkyl, alkenyl, aryl, or aralkyl. Tertiary alkyl polysulfides such as di-tert-butyl trisulfide, and mixtures comprising di-tert-butyl trisulfide (e.g., a mixture composed principally or entirely of the tri, tetra-, and pentasulfides) can be used. Examples of other useful dihydrocarbyl polysulfides include the diamyl polysulfides, the dinonyl polysulfides, the didodecyl polysulfides, and the dibenzyl polysulfides.

The sulfur-containing compound can be used in at least an equimolar or greater amount per equivalent of phosphorus-containing compound. In an aspect, from about 1 to about 1.5 molar equivalents of the sulfur-containing compound can be used.

The nitrogen-containing compound can be any nitrogen-containing compound, such as an amide of the structure R³CONR⁴R⁵ wherein R³, R⁴ and R⁵ can be each independently hydrogen or a hydrocarbyl group containing from about 1 to about 30 carbon atoms or an ethoxylated amide of the structure 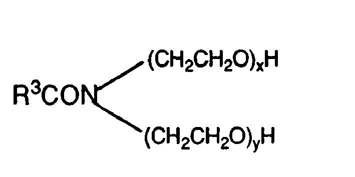 wherein the sum of x and y can be from about 1 to about 50, for example from about 1 to about 20, and as a further example from about 1 to about 10. In an aspect, when R³, R⁴ and R⁵ are hydrocarbyl groups, they contain from about 1 to about 18 carbon atoms and for example from about 1 to about 6 carbon atoms.

When R³ is hydrogen and R⁴ and R⁵ are hydrocarbyl groups, the nitrogen-containing compound is a dihydrocarbyl formamide. Non-limiting examples of dihydrocarbylformamides having utility herein include: dimethylformamide, diethylformamide, dipropylformamide, methylethylformamide, dibutylformamide, methylbutylformamide, ethylbutylformamide, dioleylformamide, distearylformamide, didecylformamide, ditridecylformamide, decyltridecylformamide, decyloleylformamide, and tridecyloleylformamide, etc.

When R³ is a hydrocarbyl group and R⁴ and R⁵ are both hydrogen, the nitrogen-containing compound is a primary hydrocarbyl amide. Non-limiting examples of primary hydrocarbyl amides include acetamide, propionamide, butyramides, valeramide, lauramide, myristamide and palmitamide. Some commercial simple fatty acid amides are available from Armak Company: coco fatty amide, octadecanamide, hydrogenated tallow fatty amide, oleamide, and 13-docosenamide.

When R³ and R⁴ are both hydrocarbyl groups and R⁵ is hydrogen, the nitrogen-containing compound is an N-substituted amide. Non-limiting examples of N-substituted amides include N-methylacetamide, N-ethylacetamide, N-methylvaleramide, N-propyllauramide, N-methyloleamide and N-butylstearamide.

When R³, R⁴ and R⁵ are all hydrocarbyl groups, the nitrogen-containing compound is an N,N-disubstituted amide. Non-limiting examples of N,N-disubstituted amides include N,N-dimethylacetamide, N-methyl-N-ethylacetamide, N,N-diethylpropionamide, N,N-dibutylvaleramide, N,N-diethylstearamide, and N,N-dimethyloleamide.

Additional non-limiting examples of the nitrogen-containing compound include N,N-bis(2-hydroxyethyl)dodecanamide, N,N-bis(2-hydroxyethyl) coco fatty acid amide, N,N-bis(2-hydroxyethyl)oleamide, N-2-hydroxyethylcocamide, and N-2-hydroxyethylstearamide.

The nitrogen-containing compound can be present in any amount that promotes the sulfurization of the phosphorus-containing compound. In an aspect, the nitrogen-containing compound can be present in an amount ranging from about 0.05 to about 2, for example from about 1 to about 1.5 molar equivalents.

In an aspect, the sulfur-containing, phosphorus-containing compound can be at least one of a compound of formulae (II) and (V): 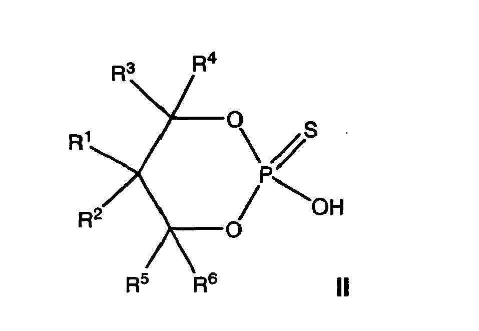 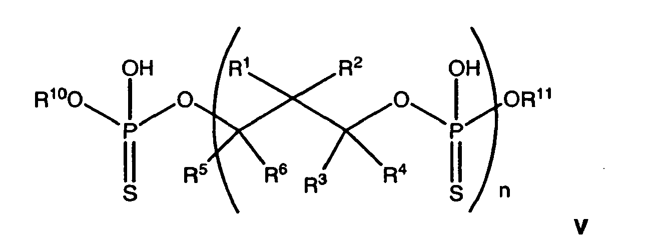 wherein n is an integer from 1 to 5; and
wherein R¹, R², R³, R⁴, R⁵, R⁶, R¹⁰, and R¹¹ can be independently selected from the group consisting of hydrogen, cyano, and hydrocarbyl groups comprising from about 1 to about 30 carbon atoms, for example from about 1 to about 20 carbon atoms, and as a further example from about 1 to about 10 carbon atoms.

In an aspect, in formula (II) R¹ and R² can be methyl; and R³, R⁴, R⁵, and R⁶ can be hydrogen. In another aspect, in formula (V), R¹ and R² can be methyl; R³, R⁴, R⁵, and R⁶ can be hydrogen; and R¹⁰ and R¹¹ can be alkyl groups comprising from about 1 to about 6 carbon atoms.

There is also disclosed a process for making a salt. In particular, an additional nitrogen-containing compound can be provided to the sulfur-containing, phosphorus-containing compound to yield a salt. The additional nitrogen-containing compound can be different from the nitrogen-containing compound discussed above in relation to making the sulfur-containing, phosphorus-containing compound. The salt of sulfur-containing, phosphorus-containing compound can have improved antiwear properties as compared to a sulfur-containing, phosphorus-containing compound and a non-sulfur-containing, phosphorus-containing compound. In an aspect, there is disclosed a lubricant composition comprising a reaction product of a sulfur-containing compound, a phosphorus-containing compound, a nitrogen-containing compound (such as an amide), and optionally an additional nitrogen-containing compound (such as an amine).

The disclosed process can include the use of solvents. The solvent can be any inert fluid substance in which at least one of the reactants is soluble or the product is soluble. Non-limiting examples include benzene, toluene, xylene, n-hexane, cyclohexane, naphtha, diethyl ether carbitol, dibutyl ether dioxane, chlorobenzene, nitrobenzene, carbon tetrachloride, chloroform, base oil, such as polyalphaolefin and gas-to-liquid oil, and process oil.

The additional nitrogen-containing compound can help neutralize any acids. Any nitrogen-containing compound can be used so long as it is soluble in the fully formulated lubricant composition, which can comprise a base oil. Non-limiting examples of the additional nitrogen-containing compound include an amide, an amine, and a heterocyclic compound comprising a basic nitrogen, such as pyridine. In an aspect, the additional nitrogen-containing compound is an amine, which can be primary, secondary, or tertiary.

In an aspect, the hydrocarbyl amines can be primary hydrocarbyl amines comprising from about 4 to about 30 carbon atoms in the hydrocarbyl group, and for example from about 8 to about 20 carbon atoms in the hydrocarbyl group. The hydrocarbyl group can be saturated or unsaturated. Representative examples of primary saturated amines are those known as aliphatic primary fatty amines. Typical fatty amines include alkyl amines such as n-hexylamine, n-octylamine, n-decylamine, n-dodecylamine, n-tetradecylamine, n-pentadecylamine, n-hexadecylamine, n-octadecylamine (stearyl amine), etc. These primary amines are available in both distilled and technical grades. While the distilled grade can provide a purer reaction product, amides and imides can form in reactions with the amines of technical grade. Also suitable are mixed fatty amines.

In an aspect, the amine salts of the disclosed compounds can be those derived from tertiary-aliphatic primary amines having at least about 4 carbon atoms in the alkyl group. For the most part, they can be derived from alkyl amines having a total of less than about 30 carbon atoms in the alkyl group.

Usually the tertiary aliphatic primary amines are monoamines represented by the formula 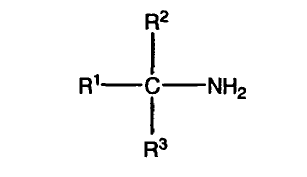 wherein R¹, R², and R³ can be the same or different and can be a hydrocarbyl group containing from about one to about 30 carbon atoms. Such amines are illustrated by tertiary-butyl amine, tertiary-hexyl primary amine, 1-methyl-1-amino-cyclohexane, tertiary-octyl primary amine, tertiary-decyl primary amine, tertiary-dodecyl primary amine, tertiary-tetradecyl primary amine, tertiary-hexadecyl primary amine, tertiary-octadecyl primary amine, tertiary-tetracosanyl primary amine, tertiary-octacosanyl primary amine.

Mixtures of amines are also useful for the purposes of this disclosure. Illustrative of amine mixtures of this type can be a mixture of C₈-C₁₆ tertiary alkyl primary amines and a similar mixture of C₁₄-C₂₄ tertiary alkyl primary amines. The tertiary alkyl primary amines and methods for their preparation are well known to those of ordinary skill in the art and, therefore, further discussion is unnecessary. The tertiary alkyl primary amine useful for the purposes of this disclosure and methods for their preparation are described in U.S. Pat. No. 2,945,749, which is hereby incorporated by reference for its teaching in this regard.

Primary amines in which the hydrocarbon chain comprises olefinic unsaturation also can be quite useful. Thus, the R groups can contain at least one olefinic unsaturation depending on the length of the chain, usually no more than one double bond per 10 carbon atoms. Representative amines are dodecenylamine, myristoleylamine, palmitoleylamine, oleylamine and linoleylamine.

Secondary amines include dialkylamines having two of the above alkyl groups including fatty secondary amines, and also mixed dialkylamines where R' can be a fatty amine and R" can be a lower alkyl group (1-9 carbon atoms) such as methyl, ethyl, n-propyl, i-propyl, butyl, etc., or R" can be an alkyl group bearing other nonreactive or polar substituents (CN, alkyl, carbalkoxy, amide, ether, thioether, halo, sulfoxide, sulfone). The fatty polyamine diamines can include mono-or dialkyl, symmetrical or asymmetrical ethylene diamines, propane diamines (1,2, or 1,3), and polyamine analogs of the above. Suitable fatty polyamines include N-coco-1,3-diaminopropane, N-soyaalkyl trimethylenediamine, N-tallow-1,3-diaminopropane, and N-oleyl-1,3-diaminopropane.

The nitrogen-containing compound can be provided in any amount necessary to drive the disclosed process to completion, i.e., if enough nitrogen-containing compound is not present then the phosphorus-containing compound does not completely sulfurize. In an aspect, the nitrogen-containing compound can be provided in an amount ranging from about 0.05 to about 2, and for example, from about 1 to about 1.5 molar equivalent per equivalent of phosphorus-containing compound.

The disclosed process can occur at about room temperature (23°C) or above, for example at least about 50°C, and as a further example ranging from about 50°C to about 90°C. Generally, mixing at room temperature for a period ranging from about 1 minute to about 8 hours can be sufficient.

Methods for the preparation of such salts are well known and reported in the literature. See for example, U.S. Pat. Nos. 2,063,629; 2,224,695; 2,447,288; 2,616,905; 3,984,448; 4,431,552; 5,354,484; Pesin et al, Zhumal Obshchei Khimii, 31(8): 2508-2515 (1961); and PCT International Application Publication No. WO 87/07638, the disclosures of which are hereby incorporated by reference.

The salt of the sulfur-containing, phosphorus-containing compound can be formed separately and then added to a lubricating or functional fluid composition. Alternatively, the salt can be formed when the phosphorus-containing compound, such as the disclosed phosphite, is blended with other components to form the lubricating or functional fluid composition. However, if the salt is formed *in situ* then it is important to restrict the acids, such as anti-rust components, present in the composition because the acids can react with the nitrogen-containing compound and stop the sulfurization and salt formations.

The salt of a sulfur-containing, phosphorus-containing compound can be oil-soluble, i.e., the hydrocarbyl chains of the salt can be of sufficient length, such as at least six carbon atoms, so that the resultant compound is soluble in a formulated composition. The incorporation of hydrophobic groups can lead to an increase in solubility in a non-polar media. Non-limiting examples of a salt of a sulfur-containing, phosphorus-containing compound include diisobutyl thiophosphoric acid C₈₋₁₆ tertiary alkyl primary amine salt, di-2-ethylhexyl-thiophosphoric acid C₈₋₁₆ tertiary alkyl primary amine salt, and neopentyl glycol thiophosphoric acid C₈₋₁₆ tertiary alkyl primary amine salt. In an aspect, there is contemplated a salt of a dithiophosphoric acid.. In another aspect, the salt of the sulfur-containing, phosphorus-containing compound can be at least one of a compound of formulae (III) and (VI) shown below. 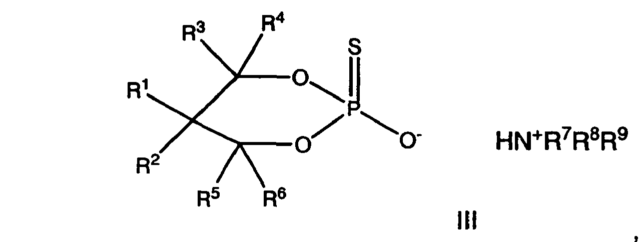 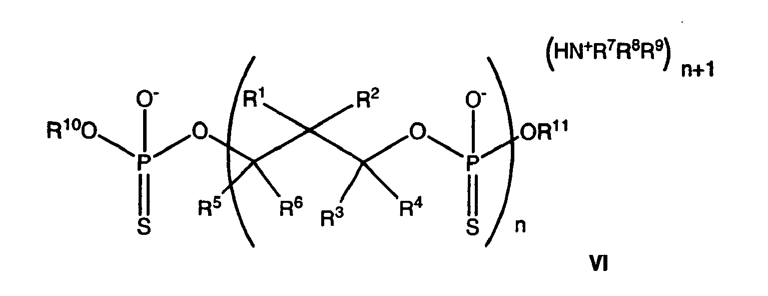 wherein n is an integer from 1 to 5; and
wherein R¹, R², R³, R⁴, R⁵, R⁶, R⁷, R⁸, R⁹, R¹⁰, and R¹¹ are independently selected from the group consisting of hydrogen, cyano, and hydrocarbyl groups comprising from about 1 to about 30 carbon atoms, for example from about 1 to about 20 carbon atoms, and as a further example from about 1 to about 10 carbon atoms. In an aspect, in formula (VI), R¹ and R² can be methyl; R³, R⁴, R⁵, R⁶, R⁷, and R⁸ can be hydrogen; R⁹ can be a tertiary C₁₂₋₁₄ alkyl group; and R¹⁰ and R¹¹ can be alkyl groups comprising from about 1 to about 6 carbon atoms. In an aspect, in formula (III), R³, R⁴, R⁵, R⁶, R⁷, and R⁸ can be hydrogen; R¹ and R² can be methyl; and R⁹ can be a tertiary C₁₂₋₁₄ alkyl group.

### EXAMPLES

### Example 1 - Preparing a Sulfur-Containing. Phosphorus-containing Compound

A 1L reactor can be equipped with a pressure equalizing addition funnel which can be charged with sulfur (26.7, 0.83mol), ETHOMID^{®} O/17 (487.5g, 0.83mol) and 4Cst PAO (188.56g). The addition funnel can then be charged with liquid neopentyl glycol phosphite (NPGP)(125.0g, 0.83mol). The NPGP is a solid at standard conditions and has a melting point ranging from about 60°C to about 65°C. The additional funnel was heated to avoid solidification.

With stirring and under a blanket of nitrogen, the NPGP can be added to the reactor while keeping the mass temperature from about 60 to about 90°C. The rate of the addition can be governed by the ability of the reaction system to control the exotherm. The process can be exothermic; therefore, cooling of the reaction mass during the addition can be required. After the addition is completed, the reaction mixture can be stirred from about 70 to about 90°C for about 2 to about 6 hours until all of the sulfur is consumed.

### Example 2 - Adding an Additional Nitrogen-containing compound to form a Salt

An additional nitrogen-containing compound, such as a branched amine (e.g. PRIMENE^{®} 81R) (153.6g, 0.83mol) can then be added to the sulfur-containing, phosphorus-containing compound of Example 1. The mixture can be stirred at 60°C for 30 minutes.

### EXAMPLE 3 - Improved Antiwear

The potential of the antiwear effectiveness can be measure by the duration of the phosphorus species at an elevated temperature. A fully formulated gear fluid was placed in a heated bath at about 325°F. Aliquots of the fully formulated gear fluid were pulled at timed intervals and the ³¹Phosphorus Nuclear Magnetic Resonance (NMR) spectrum was taken. The phosphorus species observed in the ³¹Phosphorus NMR spectrum were plotted versus time and thermal decomposition. A profile for the phosphorus antiwear species was created. The rate or amount of decomposition of the phosphorus species was dependant on the chemical structure of the alkyl chain. Examples of the phosphorus antiwear components were the dialkyl-thiophosphoric acid amine salts. The changes to the alkyl branching changed the thermal decomposition rate of the dialkylthiophosphoric acid amine salts in the heat bath at 325°F. The thermal stabilization was most effective when the beta carbon to the phosphorus-oxygen bond was branched with methyl or a high homolog alkyl group. Examples of the increased stability as demonstrated by a shallower slope are shown in Figure 1.

For the purposes of this specification and appended claims, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the following specification and attached claims are approximations that can vary depending upon the desired properties sought to be obtained by the present disclosure. At the very least, and not as an attempt to limit the application of the doctrine of equivalents to the scope of the claims, each numerical parameter should at least be construed in light of the number of reported significant digits and by applying ordinary rounding techniques.

It is noted that, as used in this specification and the appended claims, the singular forms "a," "an," and "the," include plural referents unless expressly and unequivocally limited to one referent. Thus, for example, reference to "an antioxidant " includes two or more different antioxidants. As used herein, the term "include" and its grammatical variants are intended to be non-limiting, such that recitation of items in a list is not to the exclusion of other like items that can be substituted or added to the listed items.

While particular embodiments have been described, alternatives, modifications, variations, improvements, and substantial equivalents that are or can be presently unforeseen can arise to applicants or others skilled in the art. Accordingly, the appended claims as filed and as they can be amended are intended to embrace all such alternatives, modifications variations, improvements, and substantial equivalents.

### The present invention also relates to the following embodiments (1) to (24)

(1.) A compound of formula (V): 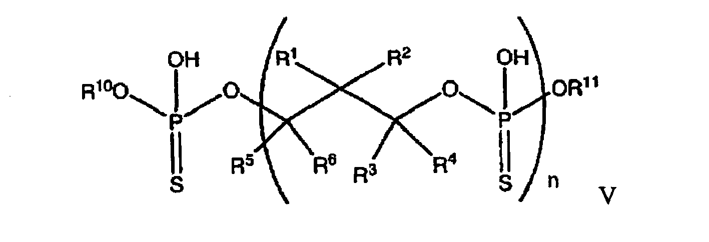 wherein n is an integer from 1 to 5; and
   wherein R¹, R², R³, R⁴, R⁵, R⁶, R¹⁰, and R¹¹ are independently selected from the group consisting of hydrogen, cyano, and hydrocarbyl groups comprising from about 1 to about 30 carbon atoms.
(2.) The compound of embodiment 1, wherein R¹ and R² are methyl; R³, R⁴, R⁵, and R⁶ are hydrogen; and R¹⁰ and R¹¹ are alkyl groups comprising from about 1 to about 6 carbon atoms.
(3.) A process of preparing a salt of a sulfur-containing, phosphorus-containing comprising:
   combining a sulfur-containing compound, an amide, and a phosphoruscontaining compound to form a first mixture; and
   combining the first mixture with an amine.
(4.) The process of embodiment (4), wherein the sulfur-containing compound is a compound comprising at least one of free and active sulfur.
(5.) The process of embodiment (4), wherein the sulfur-containing compound is chosen from elemental sulfur, polysulfides, and sulfurized olefins.
(6.) The process of embodiment (5), wherein the sulfur-containing compound is elemental sulfur.
(7.) The process of embodiment (3), wherein at least an equimolar equivalent or greater of the sulfur-containing compound is used.
(8.) The process of embodiment (3), wherein the process occurs at a temperature ranging from about 23°C to about 90°C.
(9.) The process of embodiment (3), wherein from about 0.05 to about 2 molar equivalents of the amide are used.
(10.) The process of embodiment (3), wherein from about 0.05 to about 2 molar equivalents of the amine are used.
(11.) The process of embodiment 3, wherein the phosphorus-containing compound is at least one of a compound of formula (1) and (IV): 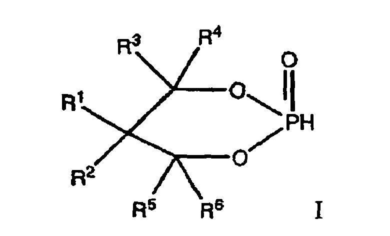 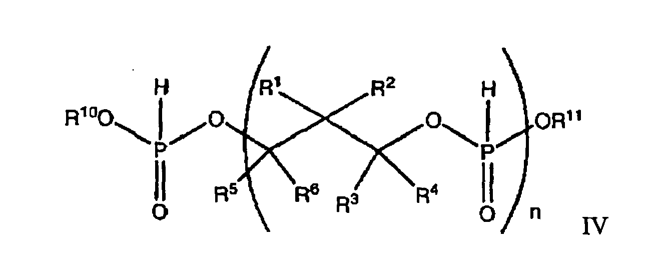 wherein n is an integer from about 1 to about 5; and
   wherein R¹, R², R³, R⁴, R⁵, R⁶, R¹⁰, and R¹¹ are independently selected from the group consisting of hydrogen, cyano, and hydrocarbyl groups comprising from about 1 to about 30 carbon atoms.
(12.) The process of embodiment (11), wherein in formula (IV) R¹ and R² are methyl; R³, R⁴, R⁵, and R⁶ are hydrogen; and R¹⁰ and R¹¹ are alkyl groups comprising from about 1 to about 6 carbon atoms.
(13.) The process of embodiment (3), wherein the first mixture comprises at least one of a compound of formula (II) and (V): 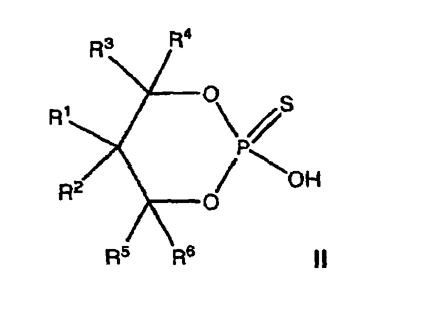 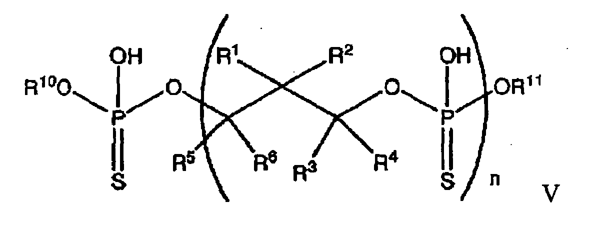 wherein n is an integer from 1 to 5; and
   wherein R¹, R², R³, R⁴, R⁵, R⁶, R¹⁰, and R¹¹ are independently selected from the group consisting of hydrogen, cyano, and hydrocarbyl groups comprising from about 1 to about 30 carbon atoms.
(14.) A process of preparing a compound of formula (II) comprising:
   combining a sulfur-containing compound, an amide, and a compound of formula (1) 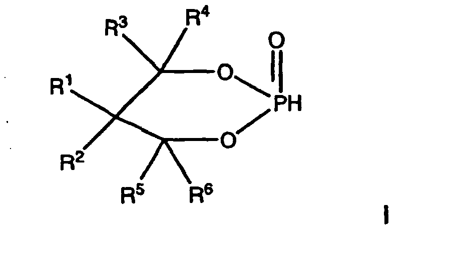
   wherein R¹, R², R³, R⁴, R⁵, and R⁶ are independently selected from the group consisting of hydrogen, cyano, and hydrocarbyl groups comprising from about 1 to about 30 carbon atoms, wherein at least one substituent is a methyl, to yield a compound of formula (II) 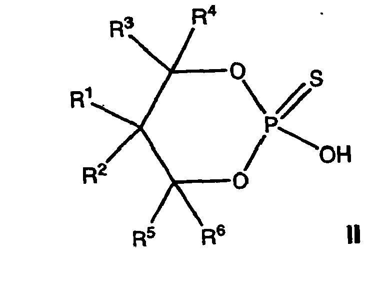 wherein R¹, R², R³, R⁴, R⁵, and R⁶ are as defined above.
(15.) The process of embodiment (14), wherein R¹ and R² are methyl; and R³, R⁴, R⁵, and R⁶ are hydrogen.
(16.) The process of embodiment (14), wherein the sulfur-containing compound is a compound comprising at least one of free and active sulfur.
(17.) The process of embodiment (16), wherein the sulfur-containing compound is chosen from elemental sulfur, polysulfides, and sulfurized olefins.
(18.) The process of embodiment (17), wherein the sulfur-containing compound is elemental sulfur.
(19.) The process of embodiment (14), wherein at least an equimolar equivalent or greater of the sulfur-containing compound is used.
(20.) The process of embodiment (14), wherein the process occurs at a temperature ranging from about 23°C to about 90°C.
(21.) The process of embodiment (14), wherein from about 0.05 to about 2 molar equivalents of the amide are used.
(22.) The process of embodiment (14), wherein the process takes from about 1 to about 8 hours.
(23.) A process for preparing a salt of a sulfur-containing, phosphorus-containing compound comprising:
   combining a sulfur-containing compound, an amide, and at least one of a dihydrocarbyl phosphite and a polymer phosphite to yield a sulfur-containing, phosphorus-containing compound; and
   combining an amine to yield a salt of the sulfur-containing, phosphoruscontaining compound.
(24.) The process of embodiment (23), wherein the amine is a linear amine.
(25.) The process of embodiment (24), wherein the linear amine is an aliphatic primary fatty amine.
(26.) The process of embodiment (23), wherein the amine is a branched amine.
(27.) The process of embodiment (26), wherein the branched amine is a mixture of C₁₄₋₂₄ tertiary alkyl primary amines.
(28.) The process of embodiment (24), wherein from about 0.05 to about 2 molar equivalents of the amine are used.
(29.) The process of embodiment (24), wherein the process takes from about 1 to about 8 hours.

## Claims

1. A process of preparing a salt of a sulfur-containing, phosphorus-containing compound comprising:
combining a sulfur-containing compound, an amide, and a phosphorus containing compound to
form a first mixture; and
combining the first mixture with an amine.

2. The process of claim 1, wherein the sulfur-containing compound is a compound comprising at least one of free and active sulphur, in particular chosen from elemental sulfur, polysulfides, and sulfurized olefins.

3. The process of claim 2, wherein the sulfur-containing compound is elemental sulfur.

4. The process of any one of claims 1 to 3, wherein at least an equimolar equivalent or greater of the sulfur-containing compound is used.

5. The process of any one of claims 1 to 4, wherein the process occurs at a temperature ranging from about 23°C to about 90°C.

6. The process of any one of claims 1 to 5, wherein from about 0.05 to about 2 molar equivalents of the amide and/or from about 0.05 to about 2 molar equivalents of the amine are used.

7. The process of any one of claims 1 to 6, wherein the phosphorus-containing compound is at least one of a compound of formula (I) and (IV): 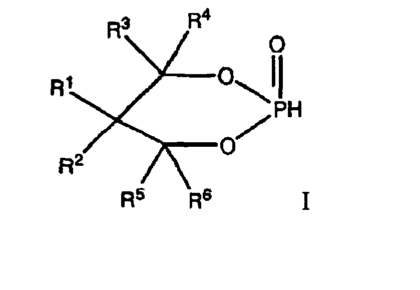 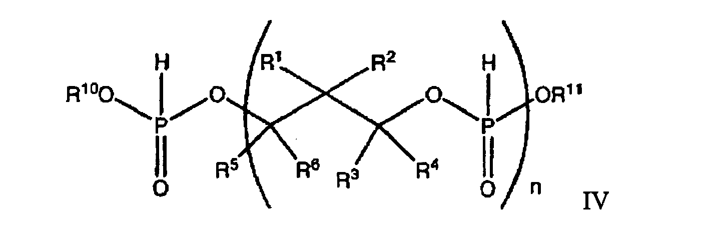 wherein n is an integer from about 1 to about 5; and
wherein R¹, R², R³, R⁴, R⁵, R⁶, R¹⁰, and R¹¹ are independently selected from the group consisting of hydrogen, cyano, and hydrocarbyl groups comprising from about 1 to about 30 carbon atoms.

8. The process of any one of claims 1 to 7, wherein the first mixture comprises at least one of a compound of formula (II) and (V): 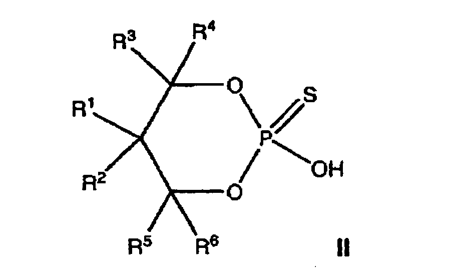 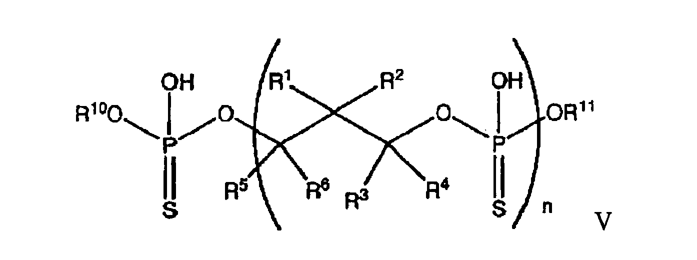 wherein n is an integer from 1 to 5; and
wherein R¹, R², R³, R⁴, R⁵, R⁶, R¹⁰, and R¹¹ are independently selected from the group consisting of hydrogen, cyano, and hydrocarbyl groups comprising from about 1 to about 30 carbon atoms.

9. A process of preparing a compound of formula (II) comprising:
combining a sulfur-containing compound, an amide, and a compound of formula (I) 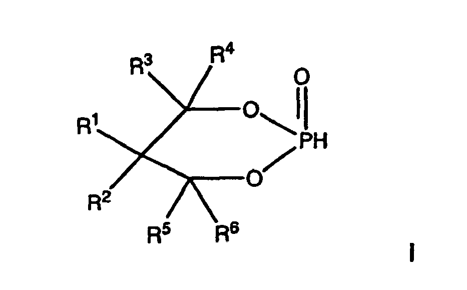
wherein R¹, R², R³, R⁴, R⁵, and R⁶ are independently selected from the group consisting of hydrogen, cyano, and hydrocarbyl groups comprising from about 1 to about 30 carbon atoms, wherein at least one substituent is a methyl, to yield a compound of formula (II) 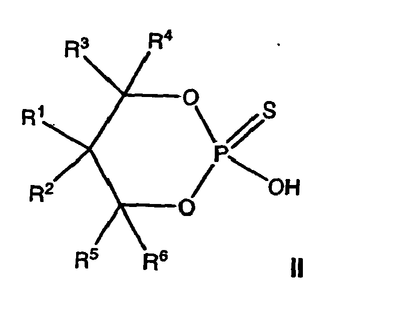 wherein R¹, R², R³, R⁴, R⁵, and R⁶ are as defmed above.

10. The process of claim 7 or 9, wherein R¹ and R² are methyl; R³, R⁴, R⁵, and R⁶ are hydrogen; and R¹⁰ and R¹¹ are alkyl groups comprising from about 1 to about 6 carbon atoms.

11. The process of claim 9 or 10, wherein the sulfur-containing compound is a compound comprising at least one of free and active sulphur, in particular chosen from elemental sulfur, polysulfides, and sulfurized olefins.

12. The process of claim 11, wherein the sulfur-containing compound is elemental sulfur.

13. The process of any one of claim 9 to 12, wherein at least an equimolar equivalent or greater of the sulfur-containing compound is used.

14. The process of claim 13, wherein the process occurs at a temperature ranging from about 23°C to about 90°C.

15. The process of any one of claims 9 to 14, wherein from about 0.05 to about 2 molar equivalents of the amide are used.

16. The process of any one of claims 9 to 15, wherein the process takes from about 1 to about 8 hours.

17. A process for preparing a salt of a sulfur-containing, phosphorus containing compound comprising:
combining a sulfur-containing compound, an amide, and at least one of a dihydrocarbyl phosphite and a polymer phosphite to yield a sulfur-containing, phosphorus-containing compound; and
combining an amine to yield a salt of the sulfur-containing, phosphorus containing compound.

18. The process of claim 17, wherein the amine is a linear amine, in particular an aliphatic primary fatty amine.

19. The process of claim 17, wherein the amine is a branched amine, in particular a mixture of C₁₄₋₂₄ tertiary alkyl primary amines.

20. The process of any one of claims 17 to 19, wherein the process takes from about 1 to about 8 hours.

21. A compound of formula (V): 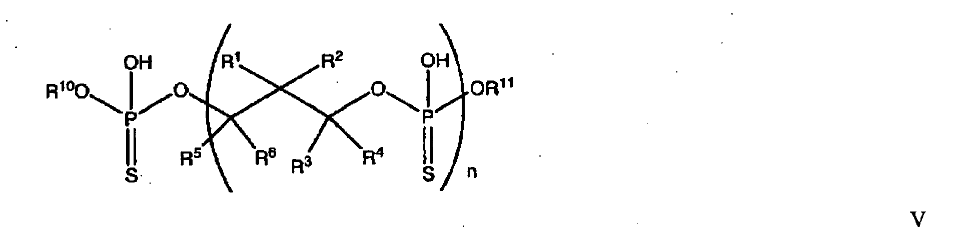 wherein n is an integer from 1 to 5; and
wherein R¹, R², R³, R⁴, R⁵, R⁶, R¹⁰, and R¹¹ are independently selected from the group consisting of hydrogen, cyano, and hydrocarbyl groups comprising from about 1 to about 30 carbon atoms.

22. The compound of claim 1, wherein R¹ and R² are methyl; R³, R⁴, R⁵, and R⁶ are hydrogen; and R¹⁰ and R¹¹ are alkyl groups comprising from about 1 to about 6 carbon atoms.
